# FASCICULE DE BREVET EUROPEEN

(11) **EP 4 291 623 B1**
(45) Date de publication et mention de la délivrance du brevet: **16.09.2026**
(21) Numéro de dépôt: 22708980.2
(22) Date de dépôt: 11.02.2022
(51) Int. Cl.: C10L 5/36, C10L 5/44, C10L 9/08

(54) **UTILISATION D'UNE BIOMASSE VAPOCRAQUEE COMME COMBUSTIBLE ALTERNATIF PAR INJECTION DIRECTE EN FOYER DE COMBUSTION**
VERWENDUNG VON MIT DAMPFEXPLOSION BEHANDELTER BIOMASSE ALS ALTERNATIVER BRENNSTOFF DURCH DIREKTEINSPRITZUNG IN EINEN OFEN
USE OF STEAM-EXPLODED BIOMASS AS ALTERNATIVE FUEL BY DIRECT INJECTION INTO A FURNACE

(30) Priorité: 12.02.2021 FR 2101380
(43) Date de publication de la demande: 20.12.2023
(73) Titulaire: Europeenne de Biomasse, 75009 Paris (FR)
(72) Inventeur: DESPRES, Jean-Luc, 51360 Verzenay (FR); QUINTERO-MARQUEZ, Adriana, 78110 Le Vésinet (FR); MARTEL, Frédéric, 51100 Reims (FR)
(74) Mandataire: IP Trust
(86) Numéro de dépôt international: PCT/FR2022/050253
(87) Numéro de publication internationale: WO 2022/171966

(56) Documents cités:
- JP-A- 2017 159 229
- NIEMELÄ NIKO P ET AL: "Fuel-specific devolatilization parameters for detailed comparison of pulverized biomass fuels", FUEL, IPC SIENCE AND TECHNOLOGY PRESS , GUILDFORD, GB, vol. 286, 17 October 2020 (2020-10-17), XP086390044, ISSN: 0016-2361, [retrieved on 20201017], DOI: 10.1016/J.FUEL.2020.119309
- PETER BJÖRKLUND ET AL: "Steam exploded pellets for heat and power generation", VGB POWERTECH,, vol. 96, no. 4, 1 January 2016 (2016-01-01), pages 52 - 56, XP001596829, ISSN: 1435-3199

## Description

L'invention a trait au domaine des biocombustibles solides, particulièrement à un combustible de type pulvérulent obtenu par vapocraquage d'une biomasse apte à être injectée directement dans un foyer de combustion. Plus précisément, l'invention concerne l'utilisation d'une biomasse vapocraquée sous forme de poudre sèche destinée à être utilisée comme combustible dans une installation en mode fluide, telle qu'une chaudière en ligne directe.

### Domaine de l'invention

De nombreuses installations industrielles, tels que des usines ou des centrales thermiques utilisant des chaudières, nécessitent l'utilisation de combustibles pour fonctionner. Il est généralement utilisé des combustibles tels que du gaz, du fioul ou encore du charbon micronisé. L'utilisation de ces combustibles a un impact écologique important sur la planète. En effet, le charbon est une source considérable de pollution environnementale. En brûlant, il émet de nombreux composants tels que : du soufre, des microparticules, des cendres, des métaux lourds (mercure, arsenic, sélénium, plomb). Le fioul et le gaz dégagent une grande quantité de CO2, impactant massivement l'eau et l'air. En plus de son impact écologique, l'utilisation de ces types de combustibles est souvent nocive pour la santé humaine et animale. Enfin, ces combustibles sont coûteux économiquement.

Les industriels se tournent de plus en plus vers des modes de production d'énergie plus intéressants écologiquement et économiquement. La production d'énergie (électrique et thermique) d'origine renouvelable peut se faire à partir de l'environnement (soleil, vent, marée, houle, géothermie, hydraulique) ou à partir de biomasse. À part la biomasse, l'hydraulique de rivière ou de barrage, et la géothermie, ces énergies renouvelables sont intermittentes sauf si les moyens de stockage de l'énergie se développaient. Et seule la biomasse constitue une énergie primaire transportable sur son lieu de transformation en chaleur et/ou électricité. Mais la biomasse est en fait une énergie peu dense, variable et périssable.

La transformation de biomasse ligno-cellulosique (bois, résidus agricoles, coproduits de l'agriculture et de l'agro-industrie) en un composé dense énergétiquement, transportable et facilement stockable permet de développer et consolider une filière industrielle d'énergie stationnaire (biocombustible utilisé en un point fixe, le foyer, contrairement aux biocarburants) et de réduire les impacts environnementaux (émission CO₂ fossile, avec une biomasse sans fertilisants ni phytosanitaires). Le traitement thermique de la biomasse par vapocraquage permet cette densification de l'énergie.

Le vapocraquage est un traitement de la biomasse communément utilisé pour la production de biocombustibles, notamment sous forme de granulés (« black pellets » en anglais). Il emploie à la fois des méthodes physiques/mécaniques et chimiques pour rompre la structure du matériel lignocellulosique. En termes généraux, le vapocraquage est une violente évaporation ou évaporation flash de l'eau en vapeur. Les récipients sous pression qui opèrent au-dessus de la pression atmosphérique peuvent aussi fournir les conditions pour une rapide ébullition qui peut être caractérisée comme explosion à la vapeur. La biomasse introduite dans un réacteur de vapocraquage, en continu ou par lots, est rapidement chauffée avec de la vapeur saturée sous haute pression. Le mélange biomasse/vapeur est maintenu pendant un certain temps pour promouvoir l'hydrolyse des hémicelluloses et autres changements chimiques et physiques, cette période est alors suivie par une décompression explosive. Le vapocraquage est typiquement initié à une température de 160-260 °C pour quelques secondes à quelques minutes avant que le matériau ne soit exposé à la pression atmosphérique. La poudre est ensuite compressée dans des presses pour produire des cylindres courts appelés granulés. Toutefois, l'utilisation de ce type de combustible nécessite des installations spécifiques permettant la combustion de granulés. Or, de nombreux industriels n'ont pas les installations adéquates pour utiliser ce type de combustible alternatif, notamment des chaudières à grilles, à gradins, ou avec des projecteurs de combustibles (spreader stoker).

Il n'existe pas de solution écologique et économique pour l'utilisation d'un biocombustible apte à être injecté dans des installations de chaudières classiques à injection directe de matériau pulvérisé.

### Art antérieur

La demande de brevet FR1905269A1, divulgue un procédé de fabrication en continu d'une matière combustible pour chaudière industrielle. Ce procédé comprend les étapes suivantes : - obtention de fragments de bois à partir de plaquettes de bois présentant un taux d'humidité compris entre 5 et 25% ; - introduction en continu d'un volume prédéterminée par minute desdits fragments de bois obtenus dans un réacteur sous pression, - exposition des fragments de bois introduits dans ledit réacteur à ladite vapeur d'eau pendant une durée suffisante pour obtenir un vapocraquage comprise entre 5 et 9 mn, - extraction en continu dudit réacteur d'un même volume prédéterminé de fragments de bois par minute, au travers d'au moins un orifice débouchant dans un conduit sensiblement à la pression atmosphérique, de sorte à provoquer une décompression explosive desdits fragments de bois extraits dudit réacteur dans ledit conduit - séparation desdits fragments de bois décompressés et de la vapeur résiduelle extraite dudit réacteur, lesdits fragments de bois obtenus après séparation formant ladite matière combustible.

La demande de brevet CN108624374A, divulgue un procédé de préparation d'un combustible respectueux de l'environnement, caractérisé en ce qu'il s'agit d'un procédé de préparation d'un combustible bioparticule en utilisant de la paille de récolte et des déchets forestiers comme matières premières, et les étapes spécifiques sont les suivantes: (1) Préparation: sélectionner les matériaux combustibles, trancher les matériaux combustibles, vérifier l'humidité des matériaux combustibles et classer en fonction de l'humidité différente; (2) Séchage: les matières combustibles classées en fonction de l'humidité différente sont pulvérisées à 10 à 30 mesh, respectivement, et envoyées à un séchoir à air pour séchage, de sorte que l'humidité des matières premières combustibles après séchage soit inférieure à 15%; (3) Moulage sous pression: compression du matériau combustible après séchage à l'étape ci-dessus en granulés, mise dans une boîte de refroidissement pour refroidir à température ambiante, puis filtration des particules d'un diamètre de 0,5 à 2 cm à travers un tamis vibrant; (4) Emballage: Les granulés qui répondent aux exigences de l'étape ci-dessus sont mis en sac et emballés, les particules qui ne répondent pas aux exigences sont pulvérisées à l'étape (2) et les étapes suivantes sont poursuivies jusqu'à ce que les exigences soient satisfaites.

Les documents PETER BJÖRKLUND et *al* et NIEMELÃ NIKO *et al* décrivent l'utilisation de granulés noirs obtenus par explosion à la vapeur, préalablement broyés avant d'être utilisés comme combustible dans une installation en mode fluide en ligne non directe. Le document NIEMELÄ NIKO *et al.* divulgue une granulométrie de poudre de pellets explosés comprise entre 112 et 355 µm. Le document PETER BJÖRKLUND *et al* divulgue que la poudre explosée peut avoir une granulométrie de 0,2 mm.

Par « en ligne non directe » on entend une installation dans laquelle la biomasse vapocraquée obtenue va subir une étape de stockage et/ou de transport avant d'être injectée dans le foyer de combustion.

JP2017159229A décrit un procédé de fabrication de biomasse en poudre comme combustible pour une chaudière. L'appareil comprend une double entrée de matière première : une entrée de matière première de type carbone (dite charbon C) et une entrée de matière première de type biomasse (dite biomasse B). L'appareil comprend un pulvérisateur permettant en fonction de la matière première : soit (I) de broyer le charbon C via un concasseur/broyeur mécanique ; soit (II) de broyer la biomasse B par explosion à la vapeur. La taille moyenne des particules de la biomasse pulvérisée est d'environ 0,5 à 1,0 mm. Le combustible de type biomasse B est ensuite introduit avec le combustible charbon C dans la chaudière pour être brûlé.

### Inconvénients de l'état de la technique

Les solutions que propose l'art antérieur de ne sont pas tout à fait satisfaisantes. En effet, les combustibles que l'art antérieur propose sont sous forme de granulés. Ce type de combustible nécessite une installation particulière et ne peut être utilisé dans des installations classiques.

### Exposé de l'invention

La présente invention propose une solution pour une utilisation d'un biocombustible répondant au problème technique exposé ci-dessus.

L'objectif est de proposer une solution intéressante, écologique et économique permettant l'utilisation d'un biocombustible pulvérulent comme alternative aux combustibles classiques, apte à être utilisé dans une installation classique par injection directe dans le foyer de combustion.

L'invention concerne donc l'utilisation d'une biomasse ligno-cellulosique vapocraquée, apte à être utilisée dans une installation classique en ligne directe et caractérisée en ce que ledit biocombustible est de type pulvérulent, ayant une granulométrie spécifique au moment de l'injection dans le foyer de combustion.

### Avantages de l'invention

La présente invention propose donc une nouvelle approche dans l'utilisation des biocombustibles. Elle fournit une solution permettant d'étendre à tous les industriels équipés d'une chaudière fonctionnant par injection en mode fluide, l'utilisation alternative d'un biocombustible constituée d'une biomasse vapocraquée sous forme de poudre.

L'invention peut être mise en œuvre dans une chaudière en ligne directe, c'est-à-dire adossée à une installation de vapocraquage, sans étape de stockage ou de transport. Cette pratique va cependant à l'encontre des usages car la biomasse vapocraquée sous forme pulvérulente pose un problème de manipulation du fait de sa faible densité et un problème de sécurité du fait du risque d'explosivité. Ces inconvénients sont ici contrebalancés par les avantages énoncés par ailleurs, relatifs aux gains économique et écologique.

Dans une utilisation en ligne directe, la poudre, produite par l'installation de vapocraquage voisine, est directement injectée par un convoyage (mécanique ou système pneumatique, ou autre) depuis le lieu de production jusqu'à la chaudière.

Le principal avantage d'une utilisation d'un biocombustible pulvérulent dans une installation en mode fluide en ligne directe est l'absence de granulation et de re-broyage, ce qui limite les investissements et les coûts opératoires, et facilite l'usage, notamment en cas de proximité immédiate du producteur et du consommateur de poudre.

Un autre avantage de l'utilisation d'une biomasse vapocraquée dans une installation en ligne directe, aucune étape de densification n'est nécessaire. Cela permet d'économiser les coûts relatifs à la densification de la biomasse que représente l'étape de granulation.

Dans un mode de réalisation particulier, dans une utilisation dans une installation en ligne directe, les évaporats issus de l'étape de vapocraquage peuvent également être injectés dans le foyer de combustion avec la biomasse vapocraquée pour optimiser la production d'énergie, réduire les coûts écologiques et économiques.

Un autre avantage de l'utilisation d'une biomasse vapocraquée dans une installation en ligne directe est d'obtenir un flux standard et contrôlé à l'injection du biocombustible pulvérulent.

La biomasse vapocraquée pulvérulente est de plus adaptée à une utilisation dans les chaudières à combustible pulvérisé, pour lesquelles elle constitue un nouveau combustible. A cet effet, la distribution granulométrique en sortie du vapocraquage est contrôlée de sorte à répondre à la spécification requise pour être pulvérisée directement dans le foyer : suffisamment petite ; dans le cas contraire, il y a un risque de boucher les buses d'injection, ou de projeter des particules trop grossières dont la combustion serait trop longue dans le ciel du foyer et qui iraient dans le circuit des fumées pour continuer leur combustion imparfaite, ce qui réduirait l'efficacité et produirait des imbrûlés, qui sont une perte de matière et d'énergie et un excès de matières dans les cendres volantes. Une telle distribution est repartie comme suit : : 90% inférieure à 550 µm, 50% est inférieure à 250 µm et 10% inférieure à 80 µm. Une telle granulométrie résulte du paramétrage établi pour le vapocraquage.

### DESCRIPTION DETAILLE DE L'INVENTION

L'invention a pour objet l'utilisation d'une biomasse ligno-cellulosique vapocraquée comme biocombustible solide, destinée à être directement injectée dans le foyer de combustion d'une installation en mode fluide en ligne directe, caractérisée en ce que ladite biomasse est sous une forme pulvérulente au moment de l'injection dans ledit foyer de combustion.

Par « biomasse ligno-cellulosique » au sens de l'invention, on entend toute biomasse comportant des caractéristiques ligno-cellulosiques, telle que : le bois, les résidus agricoles, les coproduits de l'agriculture et de l'agro-industrie.

Par « en mode fluide » au sens de l'invention, on entend que le combustible finement divisé se comporte comme un liquide ou un gaz, contrairement aux combustibles solides classiques, plus denses et plus grossiers.

Par « pulvérulente » au sens de l'invention, on entend une biomasse sous forme de poudre. Le fait que la biomasse se présente sous forme de poudre implique qu'elle est sous forme sèche, le taux d'humidité étant de préférence compris entre 5% et 27% d'humidité.

Par « en ligne directe » au sens de l'invention, on entend une installation dans laquelle la biomasse vapocraquée obtenue ne subira pas d'étape de stockage et/ou transport avant d'être injectée dans le foyer de combustion.

Le traitement thermique de la biomasse par vapocraquage permet la densification de l'énergie, en homogénéisant la biomasse en une poudre vapocraquée.

Lors d'un procédé de vapocraquage, la matière est modifiée chimiquement par une réaction thermique autour de 200°C, préférentiellement 205-210°C, avec un temps de séjour entre 5 et 10 minutes, qui correspond à l'énergie nécessaire à l'activation permettant la dépolymérisation et à la volatilisation de composés oxygénés pauvres en énergie (notamment les constituants des hémicelluloses les plus thermolabiles) tout en augmentant le pouvoir calorifique du composé final et en préservant l'intégrité des autres macromolécules comme la cellulose et la lignine, cette dernière étant essentielle pour assurer la cohésion et la résistance à l'eau de la biomasse vapocraquée.

Dans un mode de réalisation particulier, le vapocraquage s'effectue à une température comprise entre 190°C et 220°C, préférentiellement entre 205 et 210°C. Dans un autre mode de réalisation, lors du vapocraquage, le temps de séjour de la biomasse lignocellulosique est compris entre 1 à 30 mins, préférentiellement entre 5 à 10 min. De manière préférée, le procédé de vapocraquage est mis en œuvre à une température comprise entre 190°C et 220°C, et un temps de séjour compris entre 1 à 30 min.

La poudre obtenue à l'issue de l'étape de vapocraquage de la biomasse ligno-cellulosique a une granulométrie comprise entre 80 µm (10%) et 550 µm (90%). Selon l'invention, la poudre obtenue à l'issue de l'étape de vapocraquage à une granulométrie dont la distribution se repartit comme suit : 90% inférieure à 550 µm, 50% est inférieure à 250 µm et 10% inférieure à 80 µm. Cette poudre combustible est obtenue sans subir d'étape de granulation et/ou de broyage. Grâce à cette gamme granulométrique particulière, obtenue directement à l'issue du vapocraquage, la poudre est apte à être directement injectée dans les foyers de combustion de combustible pulvérise, classique.

Dans un mode de réalisation préféré, le procédé de vapocraquage est mené en continu.

Dans un mode de réalisation particulier, la biomasse vapocraquée est séparée des évaporats, qui sont produits lors de l'étape de vapocraquage, avant d'être injectée dans ledit foyer de combustion de l'installation.

Dans un mode de réalisation alternatif, les évaporats qui sont produits lors de l'étape de vapocraquage sont injectés dans ledit foyer de combustion de l'installation avec la biomasse vapocraquée.

Par « évaporats » au sens de l'invention on entend un flux gazeux de vapeur de plus faible pression contenant des composés organiques volatils (COV), issus du traitement de la biomasse. L'avantage de ce mode de réalisation est qu'il permet de récupérer l'énergie contenue dans les évaporats et dans la vapeur d'eau pour conserver/économiser l'énergie globale du procédé, au lieu de la laisser s'échapper.

Cette boucle de recyclage de l'énergie est particulièrement adaptée au vapocraquage du fait que ce mode de combustion produit une grande quantité de vapeur d'eau contrairement aux autres méthodes telles que la torréfaction, la pyrolyse... qui fonctionnent en atmosphère sèche.

## Revendications

1. Utilisation d'une biomasse vapocraquée comme biocombustible solide obtenue par un procédé de vapocraquage d'une biomasse ligno-cellulosique, destinée à être directement injectée dans le foyer de combustion d'une installation en mode fluide en ligne directe et **caractérisée en ce que** ladite biomasse est sous une forme pulvérulente dans laquelle la granulométrie de ladite biomasse se reparti comme suit : 90% inférieure à 550 µm, 50% est inférieure à 250 µm et 10% inférieure à 80 µm au moment de l'injection dans ledit foyer de combustion.

2. Utilisation selon la revendication 1 dans laquelle ledit procédé de vapocraquage est mis en œuvre à une température comprise entre 190°C et 220°C, et un temps de séjour compris entre 1 à 30 min.

3. Utilisation d'une biomasse vapocraquée selon l'une des revendications 1 ou 2, dans laquelle ladite biomasse vapocraquée est séparée des évaporats qui sont produits lors de l'étape de vapocraquage avant d'être injectée dans ledit foyer de combustion de l'installation.

4. Utilisation d'une biomasse vapocraquée selon l'une des revendications 1 ou 2, dans laquelle les évaporats qui sont produit lors de l'étape de vapocraquage sont injectés dans ledit foyer de combustion de l'installation avec la biomasse vapocraquée.

## Patentansprüche

1. Verwendung einer dampfgecrackten Biomasse als fester Biobrennstoff, erhalten durch ein Verfahren zum Dampfcracken einer Lignozellulosebiomasse, die dazu bestimmt ist, direkt in die Brennkammer einer Anlage in einem Fluidmodus in direkter Linie eingespritzt zu werden, und
**dadurch gekennzeichnet, dass** die Biomasse in einer pulverförmigen Form vorliegt, in der sich die Korngröße der Biomasse wie folgt verteilt: 90 % kleiner als 550 µm, 50 % kleiner als 250 µm ist und 10 % kleiner als 80 µm zum Zeitpunkt der Einspritzung in die Brennkammer.

2. Verwendung nach Anspruch 1, wobei das Dampfcrackverfahren bei einer Temperatur zwischen 190 °C und 220 °C und einer Verweilzeit zwischen 1 und 30 min durchgeführt wird.

3. Verwendung einer dampfgekrackten Biomasse nach einem der Ansprüche 1 oder 2, wobei die dampfgekrackte Biomasse von den Verdampfungsprodukten getrennt wird, die während des Dampfcrackschritts erzeugt werden, bevor sie in die Brennkammer der Anlage eingespritzt wird.

4. Verwendung einer dampfgecrackten Biomasse nach einem der Ansprüche 1 oder 2, wobei die Verdampfungsprodukte, die bei dem Dampfcrackschritt erzeugt werden, mit der dampfgecrackten Biomasse in die Brennkammer der Anlage eingespritzt werden.

## Claims

1. Use of a steam-cracked biomass as a solid biofuel, which steam-cracked biomass is obtained by a method of steam-cracking of a lignocellulosic biomass intended to be directly injected into the combustion chamber of a direct feed apparatus in fluid mode and **characterized in that** said biomass is in a powdery form, wherein the particle size analysis of said biomass is distributed as follows: 90% less than 550 µm, 50% is less than 250 µm, and 10% less than 80 µm at the time of the injection into said combustion chamber.

2. Use according to claim 1, wherein said steam-cracking method is implemented at a temperature between 190°C and 220°C and a dwell time between 1 and 30 minutes.

3. Use of a steam-cracked biomass according to either of claims 1 or 2, wherein, prior to being injected into said combustion chamber of the apparatus, said steam-cracked biomass is separated from evaporates which are produced during the steam-cracking step.

4. Use of a steam-cracked biomass according to either of claims 1 or 2, wherein the evaporates which are produced during the steam-cracking step are injected into said combustion chamber of the apparatus together with the steam-cracked biomass.
